# EUROPEAN PATENT SPECIFICATION

(11) **EP 4 181 632 B1**
(45) Date of publication and mention of the grant of the patent: **12.11.2025**
(21) Application number: 22162959.5
(22) Date of filing: 18.03.2022
(51) Int. Cl.: H05B 47/21, H05B 47/29, H05B 47/175, H05B 47/11, H05B 47/19

(54) **LIGHTING SYSTEM WITH ILLUMINATION-BALANCING FUNCTION AND CONTROL METHOD THEREOF**
BELEUCHTUNGSSYSTEM MIT BELEUCHTUNGSAUSGLEICHSFUNKTION UND STEUERVERFAHREN DAFÜR
SYSTÈME D'ÉCLAIRAGE AVEC FONCTION D'ÉQUILIBRAGE DE LA LUMINOSITÉ ET SON PROCÉDÉ DE COMMANDE

(30) Priority: 12.11.2021 CN 202111338762
(43) Date of publication of application: 17.05.2023
(73) Proprietor: Xiamen PVTECH Co., Ltd., Xiamen Fujian (CN)
(72) Inventor: Lu, Fuxing, Xiamen (CN); Liu, Rongtu, Xiamen (CN); Ye, Hao, Xiamen (CN)
(74) Representative: Lang, Christian

(56) References cited:
- US-A1- 2013 257 289
- US-A1- 2020 375 016

## Description

### Background of the Invention

### 1. Field of the Invention

The present invention relates to a lighting system, in particular to a lighting system with illumination-balancing function. The present invention further relates to the control method of the lighting system.

### 2. Description of the Prior Art

In recent years, the functions of lighting systems have been greatly improved due to the advances of artificial-intelligence and Internet-of-Things (IoT) technologies so as to conform to the future developing tendency.

For example, document US 2020/0375016 A1 discloses a system to identify incidents associated with streetlight fixtures based on sensor data from at least one smart sensor device coupled to a respective streetlight fixture, and document US 2013/0257289 A1 teaches a light control system including a light source and a light management unit (LMU) operative to receive a light output control signal and to control a light output emitted from the light source, wherein a lighting system according to the preamble of claim 1 is basically known from these disclosures. However, currently available lighting systems still have some shortcomings to be improved. For instance, a currently available lighting system may include a plurality of lighting devices. When any one of the lighting devices on any one of the lighting zones malfunctions, the illumination of this lighting zone would decrease. However, the currently available lighting systems fail to provide any proper mechanisms to improve the above problem.

### Summary of the Invention

The present invention is related to a lighting system with illumination-balancing function as defined in claim 1. The lighting system includes a plurality of lighting devices distributed over a lighting zone. Each of the lighting devices includes a control module and a light-emitting module. The light-emitting module is connected to the control module. When the light-emitting module malfunctions, the control module transmits a malfunctioning signal to the other lighting devices not malfunctioning, such that the brightness of each of the lighting devices, not malfunctioning and adjacent to the lighting device malfunctioning, increases so as to make the illumination of the lighting zone be substantially equal to a predetermined value.

In one embodiment, each of the lighting devices further includes a wireless communication module connected to the control module and the control module transmits the malfunctioning signal based on a wireless communication protocol via the wireless communication module.

In one embodiment, each of the lighting devices further includes a light intensity detection module connected to the control module and detects an ambient light intensity, such that the control module determines the illumination of the lighting zone according to the ambient light intensity.

The control module of each of the lighting devices not malfunctioning determines whether the lighting device is adjacent to the lighting device malfunctioning according to an identification code record and the identification code thereof.

When the control module determines that the illumination of the lighting zone fails to reach the predetermined value after the brightness of each of the lighting devices, not malfunctioning and adjacent to the lighting device malfunctioning, increases, the control module transmits a re-adjustment signal to the lighting devices, not malfunctioning and not adjacent to the lighting device malfunctioning, according to the identification code record and the identification code of the lighting device malfunctioning so as to increase the brightness of at least one of the lighting devices, not malfunctioning and not adjacent to the lighting device malfunctioning, and make the illumination of the lighting zone be substantially equal to the predetermined value.

In one embodiment, the identification code record is created according to the order of the identification codes of the lighting devices.

The present invention is further related to a control method for balancing the illumination of a lighting system as defined in claim 5. The control method includes the following steps: distributing a plurality of lighting devices over a lighting zone; transmitting a malfunctioning signal by one of the lighting devices to the other lighting devices not malfunctioning when the lighting device malfunctions; and making the brightness of each of the lighting devices, not malfunctioning and adjacent to the lighting device malfunctioning, increase so as to make the illumination of the lighting zone be substantially equal to a predetermined value.

The control method further includes the following step: each of the lighting devices not malfunctioning determining whether the lighting device is adjacent to the lighting device malfunctioning according to an identification code record and the identification code thereof.

The control method further includes the following step: transmitting a re-adjustment signal to the lighting devices, not malfunctioning and not adjacent to the lighting device malfunctioning, according to the identification code record and the identification code of the lighting device malfunctioning by the lighting device malfunctioning so as to increase the brightness of at least one of the lighting devices, not malfunctioning and not adjacent to the lighting device malfunctioning, and make the illumination of the lighting zone be substantially equal to the predetermined value.

In one embodiment, the control method further includes the following step: creating the identification code record according to the order of the identification codes of the lighting devices.

The lighting system with illumination-balancing function and the control method thereof in accordance with the embodiments of the present invention may have the following advantages:
(1) The lighting system with illumination-balancing function provides an illumination-balancing control mechanism. Thus, when any one of the lighting devices of any one of the lighting zones malfunctions, the brightness of the lighting devices, not malfunctioning and adjacent to the lighting device malfunctioning, can increase so as to make the illumination of the lighting zone be substantially equal to a predetermined value. In this way, the lighting zone can always have the ideal illumination.
(2) Each of the lighting devices of the lighting system with illumination-balancing function includes a control module. The control module can determine those lighting devices adjacent to the lighting device according to an identification code record and the identification code of the lighting device. Therefore, the lighting system can swiftly and effectively implement the illumination-balancing control mechanism in order to provide the illumination-balancing function.
(3) The lighting system with illumination-balancing function can swiftly and effectively execute the illumination-balancing control mechanism. Therefore, even if several lighting devices of any one of the lighting zones malfunction, the lighting system can still make the illumination of the lighting zone be substantially equal to the predetermined value. Accordingly, the lighting zone can always have the ideal illumination.
(4) The lighting system with illumination-balancing function can swiftly and effectively execute the illumination-balancing control mechanism, so the lighting system can conform to the future developing tendency, such as Internet-of-Things (IoT) and intelligent city. Thus, the lighting system can be more comprehensive in application.
(5) The design of the lighting system with illumination-balancing function is simple, so the lighting system can achieve the desired technical effects without significantly increasing the cost thereof. As a result, the lighting system can achieve high commercial value.

These and other objectives of the present invention will no doubt become obvious to those of ordinary skill in the art after reading the following detailed description of the preferred embodiment that is illustrated in the various figures and drawings.

### Brief Description of the Drawings

The present invention will become more fully understood from the detailed description given herein below and the accompanying drawings which are given by way of illustration only, and thus are not limitative of the present invention and wherein:
FIG. 1 is a first schematic view of a lighting system with illumination-balancing function in accordance with the present invention.
FIG. 2 is a second schematic view of the lighting system with illumination-balancing function in accordance with the present invention.
FIG. 3 is a block diagram of a lighting device of the lighting system with illumination-balancing function in accordance with the present invention.
FIG. 4 is a first schematic view of a lighting system with illumination-balancing function in accordance with the present invention.
FIG. 5 is a second schematic view of the lighting system with illumination-balancing function in accordance with the present invention.
FIG. 6 is a flow chart of a control method for balancing the illumination of a lighting system in accordance with the present invention.

### Detailed Description

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing. It should be understood that, when it is described that an element is "coupled" or "connected" to another element, the element may be "directly coupled" or "directly connected" to the other element or "coupled" or "connected" to the other element through a third element. In contrast, it should be understood that, when it is described that an element is "directly coupled" or "directly connected" to another element, there are no intervening elements.

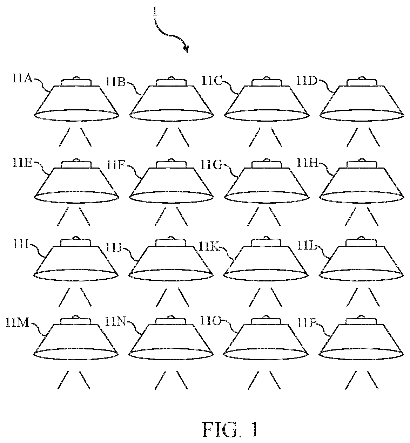

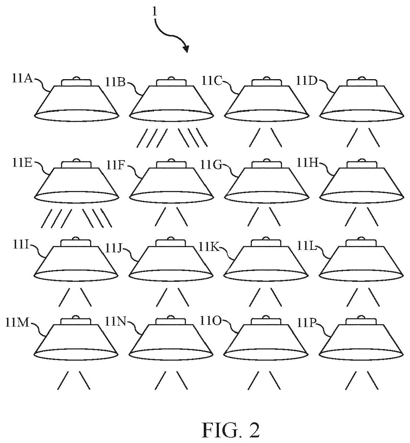

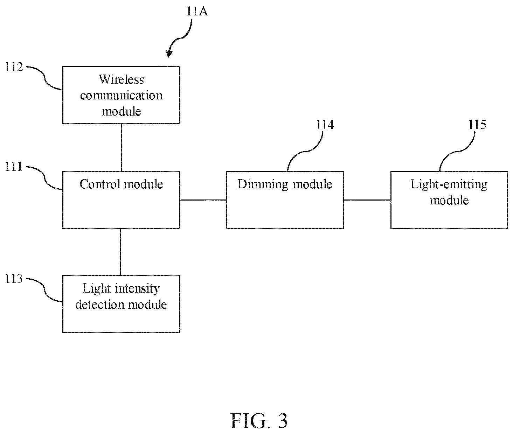

Please refer to FIG. 1, FIG. 2 and FIG. 3. FIG. 1 and FIG. 2 are a first schematic view and a second schematic view of a lighting system with illumination-balancing function in accordance with the present invention. FIG. 3 is a block diagram of a lighting device of the lighting system with illumination-balancing function in accordance with the present invention. As shown in FIG. 1, the lighting system 1 with illumination-balancing function includes a plurality of lighting devices 11A~11P distributed over a lighting zone and the lighting devices 11A~11P can be wirelessly connected to each other in order to form a network. The lighting system 1 may include more lighting devices in addition to the lighting devices 11A~11P and all lighting devices of the lighting system 1 can be distributed over a plurality of lighting zones. This embodiment takes one of the lighting zones (the first lighting zone) for example.

As shown in FIG. 3, the lighting device 11A includes a control module 111, a wireless communication module 112, a light intensity detection module 113, a dimming module 114 and a light-emitting module 115.

In one embodiment, the control module 111 may be, but not limited to a microcontroller (MCU), a central processing unit (CPU), an application specific integrated circuit (ASIC) or other similar elements.

The wireless communication module 112 is connected to the control module 111. In one embodiment, the wireless communication module 112 may be, but not limited to, a Bluetooth module, Wi-Fi module, a ZigBee module or other similar elements.

The light intensity detection module 113 is connected to the control module 111. In one embodiment, the light intensity detection module 113 may be, but not limited to, a light intensity sensor, an ambient light or other similar elements.

The dimming module 114 is connected to the control module 111. In one embodiment, the dimming module 114 may be, but not limited to, a Triac dimmer, a digital addressable lighting interface (DALI) dimmer, a MOS dimmer or other similar elements.

The light-emitting module 115 is connected to the dimming module 114. In one embodiment, the light-emitting module 115 may be, but not limited to, a light-emitting diode (LED), a LED array, a bulb or other similar elements. The circuit structures of the lighting devices 11A~11P are the same with each other.

As shown in FIG. 2, when the light-emitting module 115 of the lighting device 11A malfunctions, the control module 111 of the lighting device 11A transmits a malfunctioning signal based on a wireless communication protocol via the wireless communication module 112 to the other lighting devices 11B~11P not malfunctioning. Then, the control module 111 of each of the lighting devices 11B, 11E adjacent to the lighting device 11A adjusts and increases the brightness of the light-emitting module 115 thereof via the dimming module 114 thereof so as to make the illumination of the lighting zone (the first lighting zone) be substantially equal to (or greater than) a predetermined value. The predetermined value can be determined according to actual needs. The light intensity detection module 113 of each of the lighting devices 11B, 11E can detect the ambient light intensity, such that the control module 111 thereof can determine whether the illumination of the lighting zone has been substantially equal to (or greater than) the predetermined value according to the ambient light intensity. In one embodiment, the aforementioned wireless communication protocol may be, but not limited to, Bluetooth communication protocol, Wi-Fi communication protocol, ZigBee communication protocol or other similar communication protocols.

The embodiment just exemplifies the present invention and is not intended to limit the scope of the present invention; any equivalent modification and variation is to be also included within the scope of the following claims and their equivalents.

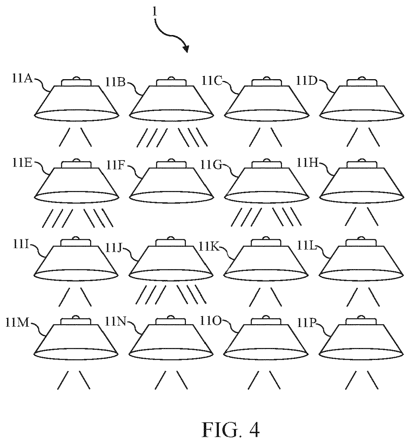

Please refer to FIG. 4, which is a first schematic view of a lighting system with illumination-balancing function in accordance with the present invention. As shown in FIG. 4, the lighting system 1 with illumination-balancing function provides a novel mechanism, such that any one of the lighting devices 11A~11P can determine the lighting devices adjacent thereto.

For example, when the light-emitting module 115 of the lighting device 11F malfunctions, the control module 111 of the lighting device 11F transmits the malfunctioning signal via the wireless communication module 112 thereof based on the wireless communication protocol to the other lighting devices 11A~11E, 11G~11P not malfunctioning. Then, the control module 111 of each of the lighting devices 11A~11E, 11G~11P determines whether the lighting device corresponding to the control module 111 is adjacent to the lighting device 11F or not according to identification code record and the identification code thereof. The identification code record may be created according to the order of the identification codes of the lighting devices 11A~11P. In addition, the identification code record may further include the arrangement of the lighting devices 11A~11P. For instance, the arrangement of the lighting devices 11A~11P of the embodiment may be a 4×4 matrix. In another embodiment, the lighting devices 11A~11P may be arranged by different ways so as to be in line with actual needs. As a result, in this embodiment, the control module 111 of each of the lighting devices 11A~11E, 11G~11P can effectively determine whether the lighting device corresponding to the control module 111 is adjacent to the lighting device 11F malfunctioning. In another embodiment, the identification code record can also include other different information. For example, the identification code record can record the position of each of the lighting devices and the lighting devices adjacent thereto, such that each lighting device can directly determine which of the other lighting devices are adjacent thereto.

In this embodiment, the control modules 111 of the lighting devices 11B, 11E, 11G, 11J can determine that the lighting devices 11B, 11E, 11G, 11J are adjacent to the lighting device 11F malfunctioning according to the identification code record and the identification codes thereof. In the meanwhile, the control modules 111 of the lighting devices 11B, 11E, 11G, 11J can adjust and increase the brightness of the light-emitting modules 115 thereof via the dimming modules 114 thereof. The control modules 111 of the lighting devices 11B, 11E, 11G, 11J stop increasing the brightness of the light-emitting modules 115 thereof until the light intensity detection modules 113 thereof detect that the illumination of the lighting zone has been substantially equal to (or greater than) the predetermined value.

If two or more of the lighting devices 11A~11P malfunction at the same time, the above mechanism can also keep the illumination of the lighting zone being substantially equal to (or greater than) the predetermined value, so the lighting system 1 can actually satisfy actual needs.

The embodiment just exemplifies the present invention and is not intended to limit the scope of the present invention; any equivalent modification and variation is to be also included within the scope of the following claims and their equivalents.

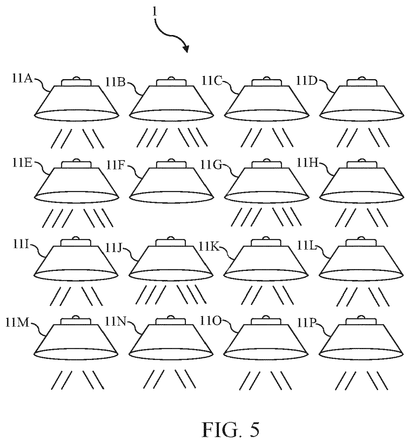

Please refer to FIG. 5, which is a second schematic view of the lighting system with illumination-balancing function in accordance with the present invention. As shown in FIG. 5, the lighting system 1 with illumination-balancing function further provides a novel re-adjustment mechanism. When the illumination of the lighting zone cannot reach (or greater than) the predetermined value even if the control modules 111 of the lighting devices 11B, 11E, 11G, 11J keep increasing the brightness of the light-emitting modules 115 thereof via the dimming modules 114 thereof, the control module 111 of the lighting device 11F can transmit a re-adjustment signal to the lighting devices 11A, 11C~11D, 11H~11I, 11K~11P, not malfunctioning and not adjacent to the lighting device 11F malfunctioning. Then, the control modules 111 of the lighting devices 11A, 11C~11D, 11H~11I, 11K~11P can adjust and increase the brightness of the light-emitting modules 115 thereof via the dimming modules 114 thereof. The control modules 111 of the lighting devices 11A, 11C~11D, 11H~11I, 11K~11P stop increasing the brightness of the light-emitting modules 115 thereof until the light intensity detection modules 113 thereof detect that the illumination of the lighting zone has been substantially equal to (or greater than) the predetermined value. The brightness of the lighting devices 11A, 11C~11D, 11H~11I, 11K~11P may be less than the brightness of the lighting devices 11B, 11E, 11G, 11J after the re-adjustment mechanism is executed. In another embodiment, the brightness of the lighting devices 11A, 11C~11D, 11H~11I, 11K~11P may be equal to or greater than the brightness of the lighting devices 11B, 11E, 11G, 11J after the re-adjustment mechanism is executed.

As previously stated, the above technical means allows the lighting system 1 to provide an effective illumination balancing control mechanism. Thus, when any one of the lighting devices in any one of the lighting zones malfunctions, the brightness of the lighting devices, not malfunctioning and adjacent to the lighting device malfunctioning, can be increased in order to make the illumination of the lighting zone be substantially equal to (or greater than) the predetermined value. In this way, each of the lighting zones can always have the appropriate illumination.

If two or more of the lighting devices 11A~11P malfunction at the same time, the aforementioned re-adjustment mechanism can more effectively make sure that the illumination of the lighting zone can be substantially equal to (or greater than) the predetermined value, so the lighting system 1 can actually satisfy actual needs.

The embodiment just exemplifies the present invention and is not intended to limit the scope of the present invention; any equivalent modification and variation is to be also included within the scope of the following claims and their equivalents.

It is worthy to point out that currently available lighting systems fail to provide an appropriate mechanism to solve the problem that the illumination of a lighting zone decreases when any one of the lighting devices in the lighting zone malfunctions. On the contrary, according to the present invention, the lighting system with illumination-balancing function provides an illumination-balancing control mechanism. Thus, when any one of the lighting devices of any one of the lighting zones malfunctions, the brightness of the lighting devices, not malfunctioning and adjacent to the lighting device malfunctioning, can increase so as to make the illumination of the lighting zone be substantially equal to a predetermined value. In this way, the lighting zone can always have the ideal illumination. The control module of each of the lighting devices can determine those lighting devices adjacent to the lighting device according to an identification code record and the identification code of the lighting device. Therefore, the lighting system can swiftly and effectively implement the illumination-balancing control mechanism in order to provide the illumination-balancing function.

Besides, according to the present invention, the lighting system with illumination-balancing function can swiftly and effectively execute the illumination-balancing control mechanism. Therefore, even if several lighting devices of any one of the lighting zones malfunction, the lighting system can still make the illumination of the lighting zone be substantially equal to the predetermined value. Accordingly, the lighting zone can always have the ideal illumination. As described above, the lighting system with illumination-balancing function according to the embodiments of the present invention can really achieve great technical effects.

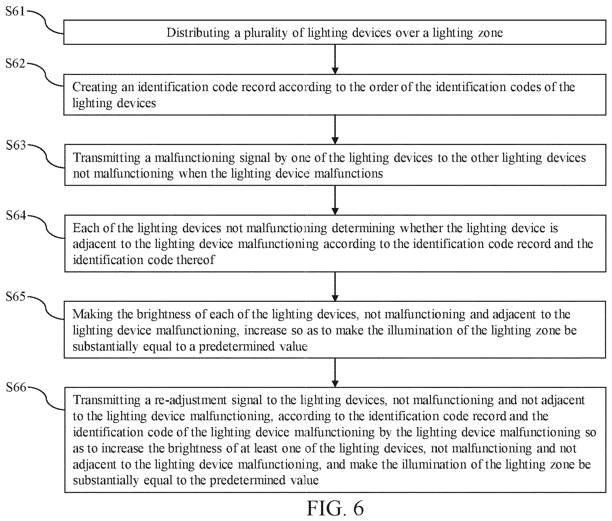

Please refer to FIG. 6, which is a flow chart of a control method for balancing the illumination of a lighting system in accordance with the present invention. As shown in FIG. 6, the control method for balancing the illumination of the lighting system includes the following steps:
Step S61: distributing a plurality of lighting devices over a lighting zone.
Step S62: creating an identification code record according to the order of the identification codes of the lighting devices.
Step S63: transmitting a malfunctioning signal by one of the lighting devices to the other lighting devices not malfunctioning when the lighting device malfunctions.
Step S64: each of the lighting devices not malfunctioning determining whether the lighting device is adjacent to the lighting device malfunctioning according to the identification code record and the identification code thereof.
Step S65: making the brightness of each of the lighting devices, not malfunctioning and adjacent to the lighting device malfunctioning, increase so as to make the illumination of the lighting zone be substantially equal to a predetermined value.
Step S66: transmitting a re-adjustment signal to the lighting devices, not malfunctioning and not adjacent to the lighting device malfunctioning, according to the identification code record and the identification code of the lighting device malfunctioning by the lighting device malfunctioning so as to increase the brightness of at least one of the lighting devices, not malfunctioning and not adjacent to the lighting device malfunctioning, and make the illumination of the lighting zone be substantially equal to the predetermined value.

The embodiment just exemplifies the present invention and is not intended to limit the scope of the present invention; any equivalent modification and variation is to be also included within the scope of the following claims and their equivalents.

Although the operations of the method(s) herein are shown and described in a particular order, the order of the operations of each method may be altered so that certain operations may be performed in an inverse order or so that certain operations may be performed, at least in part, concurrently with other operations. In another embodiment, instructions or sub-operations of distinct operations may be implemented in an intermittent and/or alternating manner.

To sum up, according to the present invention, the lighting system with illumination-balancing function provides an illumination-balancing control mechanism. Thus, when any one of the lighting devices of any one of the lighting zones malfunctions, the brightness of the lighting devices, not malfunctioning and adjacent to the lighting device malfunctioning, can increase so as to make the illumination of the lighting zone be substantially equal to a predetermined value. In this way, the lighting zone can always have the ideal illumination.

Also, according to the present invention, each of the lighting devices of the lighting system with illumination-balancing function includes a control module. The control module can determine those lighting devices adjacent to the lighting device according to an identification code record and the identification code of the lighting device. Therefore, the lighting system can swiftly and effectively implement the illumination-balancing control mechanism in order to provide the illumination-balancing function.

Further, according to the present invention, the lighting system with illumination-balancing function can swiftly and effectively execute the illumination-balancing control mechanism. Therefore, even if several lighting devices of any one of the lighting zones malfunction, the lighting system can still make the illumination of the lighting zone be substantially equal to the predetermined value. Accordingly, the lighting zone can always have the ideal illumination.

Moreover, according to the present invention, the lighting system with illumination-balancing function can swiftly and effectively execute the illumination-balancing control mechanism, so the lighting system can conform to the future developing tendency, such as Internet-of-Things (IoT) and intelligent city. Thus, the lighting system can be more comprehensive in application.

Furthermore, according to the present invention, the design of the lighting system with illumination-balancing function is simple, so the lighting system can achieve the desired technical effects without significantly increasing the cost thereof. As a result, the lighting system can achieve high commercial value.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A lighting system (1) with illumination-balancing function, comprising lighting devices (11A - 11P) distributed over a lighting zone, wherein each of the lighting devices (11A - 11P) comprises:
a control module (111) and
a light-emitting module (115) connected to the control module (111), wherein, when one of the lighting devices (11F) malfunctions, the control module (111) thereof is configured to transmit a malfunctioning signal to the other lighting devices (11A-11E, 11G-11P) not malfunctioning, and
the respective control module (111) of each lighting device (11A-11E, 11G-11P) not malfunctioning is configured to determine whether the lighting device (11A-11E, 11G-11P) is adjacent to the one of the lighting devices (11F) malfunctioning according to an identification code record and an identification code thereof,
whereby the respective control module (111) of each of the lighting devices (11B, 11E, 11G, 11J) not malfunctioning and adjacent to the one of the lighting devices (11F) malfunctioning is configured to adjust and increase the brightness of the light-emitting module (115) thereof,
wherein the respective control module (111) of each lighting device (11A - 11P) is further configured to determine whether an illumination of the lighting zone is substantially equal to a predetermined value, the lighting system being **characterized in that** when the illumination of the lighting zone fails to reach the predetermined value after the brightness of each of the lighting devices (11B, 11E, 11G, 11J) not malfunctioning and adjacent to the one of the lighting devices (11F) malfunctioning has been increased, the control module (111) of the one of the lighting devices (11F) malfunctioning is configured to transmit a re-adjustment signal to the lighting devices (11A, 11C~11D, 11H-11I, 11K-11P) not malfunctioning and not adjacent to the one of the lighting devices (11F) malfunctioning according to the identification code record and the identification code of the one of the lighting devices malfunctioning (11F), so as to increase a brightness of at least one of the lighting devices (11A, 11C-11D, 11H-11I, 11K-11P) not malfunctioning and not adjacent to the one of the lighting devices (11F) malfunctioning, so as to make the illumination of the lighting zone be substantially equal to the predetermined value.

2. The lighting system (1) with illumination-balancing function as claimed in claim 1,
wherein each of the lighting devices (11A - 11P) further comprises a wireless communication module (112) connected to the control module (111) thereof and the control module (111) is configured to transmit the malfunctioning signal based on a wireless communication protocol via the wireless communication module (112).

3. The lighting system (1) with illumination-balancing function as claimed in claim 1,
wherein each of the lighting devices (11A - 11P) further comprises a light intensity detection module (113) connected to the control module (111) thereof and configured to detect an ambient light intensity, whereby the control module (111) determines the illumination of the lighting zone according to the ambient light intensity.

4. The lighting system (1) with illumination-balancing function as claimed in claim 1,
wherein the identification code record is created according to an order of the identification codes of the lighting devices (11A - 11P).

5. A control method for balancing an illumination of a lighting system (1), comprising the steps of:
distributing lighting devices (11A - 11P) over a lighting zone: transmitting a malfunctioning signal by one of the lighting devices (11F) to the other lighting devices not malfunctioning (11A-11E, 11G-11P) when the one of the lighting devices (11F) malfunctions, wherein each of the lighting devices (11A-11E, 11G-11P) not malfunctioning determines whether it is adjacent to the one of the lighting devices (11F) malfunctioning according to an identification code record and an identification code thereof;
making a brightness of each of the lighting devices (11B, 11E, 11G, 11J) not malfunctioning and adjacent to the one of the lighting devices (11F) malfunctioning to be increased so as to make an illumination of the lighting zone be substantially equal to a predetermined value;
the control method being **characterized in that** in case an illumination of the lighting zone fails to reach the predetermined value after the brightness of each of the lighting devices (11B, 11E, 11G, 11J) not malfunctioning and adjacent to the one of the lighting devices (11F) malfunctioning has been increased, the method further includes the step of transmitting a re-adjustment signal from the one of the lighting devices (11F) malfunctioning to the lighting devices (11A, 11C-11D, 11H-11I, 11K-11P) not malfunctioning and not adjacent to the one of the lighting devices (11F) malfunctioning according to the identification code record and the identification code of the one of the lighting devices (11F) malfunctioning,
so as to increase a brightness of at least one of the lighting devices (11A, 11C-11D, 11H-11I, 11K-11P) not malfunctioning and not adjacent to the one of the lighting devices (11F) malfunctioning, so as to make the illumination of the lighting zone be substantially equal to the predetermined value.

6. The control method for balancing the illumination of the lighting system (1) as claimed in claim 5, **characterized by** creating the identification code record according to an order of the identification codes of the lighting devices (11A - 11P).

## Patentansprüche

1. Beleuchtungssystem (1) mit Beleuchtungsausgleichsfunktion, das über eine Beleuchtungszone verteilte Beleuchtungsvorrichtungen (11A - 11P) umfasst, wobei jede der Beleuchtungsvorrichtungen (11A - 11P) umfasst:
ein Steuermodul (111) und
ein Lichtemissionsmodul (115), das mit dem Steuermodul (111) verbunden ist, wobei, wenn eine der Beleuchtungsvorrichtungen (11F) eine Fehlfunktion aufweist, das Steuermodul (111) derselben konfiguriert ist, um ein Fehlfunktionssignal an die anderen Beleuchtungsvorrichtungen (11A-11E, 11G-11P), die keine Fehlfunktion aufweisen, zu übermitteln, und
das jeweilige Steuermodul (111) von jeder Beleuchtungsvorrichtung (11A-11E, 11G-11P) ohne Fehlfunktion konfiguriert ist, um zu bestimmen, ob die Beleuchtungsvorrichtung (11A-11E, 11G-11P) benachbart zu der einen der Beleuchtungsvorrichtungen (11F) mit Fehlfunktion ist gemäß einem Identifikationscode-Datensatz und einem Identifikationscode davon,
wobei das jeweilige Steuermodul (111) von jeder der Beleuchtungsvorrichtungen (11B, 11E, 11G, 11J) ohne Fehlfunktion und benachbart zu der einen der Beleuchtungsvorrichtungen (11F) mit Fehlfunktion konfiguriert ist, um die Helligkeit von deren Lichtemissionsmodul (115) einzustellen und zu erhöhen,
wobei das jeweilige Steuermodul (111) von jeder Beleuchtungsvorrichtung (11A - 11P) ferner konfiguriert ist, um zu bestimmen, ob eine Ausleuchtung der Beleuchtungszone im Wesentlichen einem vorgegebenen Wert entspricht,
wobei das Beleuchtungssystem **dadurch gekennzeichnet ist, dass**,
wenn die Ausleuchtung der Beleuchtungszone den vorgegebenen Wert nicht erreicht, nachdem die Helligkeit von jeder der Beleuchtungsvorrichtungen (11B, 11E, 11G, 11J) ohne Fehlfunktion und neben derjenigen der Beleuchtungsvorrichtungen (11F) mit Fehlfunktion erhöht wurde, das Steuermodul (111) von derjenigen der Beleuchtungsvorrichtungen (11F) mit Fehlfunktion konfiguriert ist, um gemäß dem Identifikationscode-Datensatz und dem Identifikationscode der einen der Beleuchtungsvorrichtungen (11F) mit Fehlfunktion ein Neueinstellungssignal an die Beleuchtungsvorrichtungen (11A, 11C-11D, 11H-11I, 11K-11P) ohne Fehlfunktion und nicht benachbart zu derjenigen der Beleuchtungsvorrichtungen (11F) mit Fehlfunktion zu übermitteln, um eine Helligkeit von mindestens einer der Beleuchtungsvorrichtungen (11A, 11C-11D, 11H-11I, 11K-11P) ohne Fehlfunktion und nicht benachbart zu der einen der Beleuchtungsvorrichtungen (11F) mit Fehlfunktion zu erhöhen, um zu bewirken, dass die Ausleuchtung der Beleuchtungszone im Wesentlichen dem vorgegebenen Wert entspricht.

2. Beleuchtungssystem (1) mit Beleuchtungsausgleichsfunktion nach Anspruch 1, bei welchem jede der Beleuchtungsvorrichtungen (11A - 11P) ferner ein drahtloses Kommunikationsmodul (112) umfasst, das mit dem Steuermodul (111) derselben verbunden ist, und das Steuermodul (111) konfiguriert ist, um das Fehlfunktionssignal basierend auf einem drahtlosen Kommunikationsprotokoll über das drahtlose Kommunikationsmodul (112) zu übertragen.

3. Beleuchtungssystem (1) mit Beleuchtungsausgleichsfunktion nach Anspruch 1, bei welchem jede der Beleuchtungsvorrichtungen (11A - 11P) ferner ein Lichtintensitätsdetektionsmodul (113) umfasst, das mit dem Steuermodul (111) derselben verbunden ist und zur Detektion einer Umgebungslichtintensität konfiguriert ist, wobei das Steuermodul (111) die Ausleuchtung der Beleuchtungszone entsprechend der Umgebungslichtintensität bestimmt.

4. Beleuchtungssystem (1) mit Beleuchtungsausgleichsfunktion nach Anspruch 1, bei welchem der Identifikationscode-Datensatz entsprechend einer Reihenfolge der Identifikationscodes der Beleuchtungsvorrichtungen (11A - 11P) erzeugt wird.

5. Steuerverfahren zum Ausgleichen einer Ausleuchtung eines Beleuchtungssystems (1), welches folgende Schritte umfasst:
Verteilen von Beleuchtungsvorrichtungen (11A - 11P) über eine Beleuchtungszone;
Übermitteln eines Fehlfunktionssignals durch eine der Beleuchtungsvorrichtungen (11F) an die anderen Beleuchtungsvorrichtungen (11A-11E, 11G-11P) ohne Fehlfunktion, wenn die eine der Beleuchtungsvorrichtungen (11F) eine Fehlfunktion aufweist, wobei jede der Beleuchtungsvorrichtungen (11A-11E, 11G-11P) ohne Fehlfunktion bestimmt, ob sie sich neben der einen der Beleuchtungsvorrichtungen (11F) mit Fehlfunktion befindet, anhand eines Identifikationscode-Datensatzes und eines Identifikationscodes davon;
Erhöhen einer Helligkeit von jeder der Beleuchtungsvorrichtungen (11B, 11E, 11G, 11J) ohne Fehlfunktion und benachbart zu der einen der Beleuchtungsvorrichtungen (11F) mit Fehlfunktion, um zu bewirken, dass eine Ausleuchtung der Beleuchtungszone im Wesentlichen einem vorgegebenen Wert entspricht;
wobei das Steuerverfahren **dadurch gekennzeichnet ist, dass** für den Fall, dass eine Ausleuchtung der Beleuchtungszone den vorgegebenen Wert nicht erreicht, nachdem die Helligkeit von jeder der Beleuchtungsvorrichtungen (11B, 11E, 11G, 11J) ohne Fehlfunktion und neben derjenigen der Beleuchtungsvorrichtungen (11F) mit Fehlfunktion erhöht wurde, das Verfahren ferner folgenden Schritt umfasst
Übermitteln eines Neueinstellungssignals von derjenigen der Beleuchtungsvorrichtungen (11F) mit Fehlfunktion an diejenigen Beleuchtungsvorrichtungen (11A, 11C-11D, 11H-11I, 11K-11P) ohne Fehlfunktion und nicht benachbart zu derjenigen der Beleuchtungsvorrichtungen (11F) mit Fehlfunktion gemäß dem Identifikationscode-Datensatz und dem Identifikationscode von derjenigen der Beleuchtungsvorrichtungen (11F) mit Fehlfunktion, um eine Helligkeit von mindestens einer der Beleuchtungsvorrichtungen (11A, 11C-11D, 11H-11I, 11K-11P) ohne Fehlfunktion und nicht benachbart zu der einen der Beleuchtungsvorrichtungen (11F) mit Fehlfunktion zu erhöhen, um zu bewirken, dass die Ausleuchtung der Beleuchtungszone im Wesentlichen dem vorgegebenen Wert entspricht.

6. Steuerverfahren zum Ausgleichen einer Ausleuchtung des Beleuchtungssystems (1) nach Anspruch 5, welches **dadurch gekennzeichnet ist, dass** der Identifikationscode-Datensatz entsprechend einer Reihenfolge der Identifikationscodes der Beleuchtungsvorrichtungen (11A - 11P) erzeugt wird.

## Revendications

1. Système d'éclairage (1) ayant une fonction d'équilibrage de l'éclairage, comprenant des dispositifs d'éclairage (11A - 11P) répartis sur une zone d'éclairage, dans lequel chacun des dispositifs d'éclairage (11A - 11P) comprend :
un module de commande (111) et
un module électroluminescent (115) raccordé au module de commande (111),
dans lequel, lorsqu'un des dispositifs d'éclairage (11F) présente un dysfonctionnement, le module de commande (111) de celui-ci est configuré pour transmettre un signal de dysfonctionnement aux autres dispositifs d'éclairage (11A-11E, 11G-11P) ne présentant pas de dysfonctionnement, et
le module de commande respectif (111) de chaque dispositif d'éclairage (11A-11E, 11G-11P) ne présentant pas de dysfonctionnement est configuré pour déterminer si le dispositif d'éclairage (11A-11E, 11G-11P) est adjacent à l'un des dispositifs d'éclairage (11F) ne présentant pas de dysfonctionnement selon un enregistrement de code d'identification et un code d'identification de celui-ci,
selon lequel le module de commande respectif (111) de chacun des dispositifs d'éclairage (11B, 11E, 11G, 11J) ne présentant pas de dysfonctionnement et adjacent à l'un des dispositifs d'éclairage (11F) présentant un dysfonctionnement est configuré pour ajuster et augmenter la luminosité de son module électroluminescent (115), dans lequel le module de commande respectif (111) de chaque dispositif d'éclairage (11A - 11P) est en outre configuré pour déterminer si un éclairage de la zone d'éclairage est sensiblement égal à une valeur prédéterminée.
le système d'éclairage est **caractérisé en ce que**, lorsque l'éclairage de la zone d'éclairage ne parvient pas à atteindre la valeur prédéterminée après que la luminosité de chacun des dispositifs d'éclairage (11B, 11E, 11G, 11J) ne présentant pas de dysfonctionnement et adjacents à l'un des dispositifs d'éclairage (11F) présentant un dysfonctionnement a été augmentée, le module de commande (111) de l'un des dispositifs d'éclairage (11F) présentant un dysfonctionnement est configuré pour transmettre un signal de réajustement aux dispositifs d'éclairage (11A, 11C-11D, 11H-111, 11K-11P) ne présentant pas de dysfonctionnement et non adjacents à l'un des dispositifs d'éclairage (11F) présentant un dysfonctionnement, selon l'enregistrement de code d'identification et le code d'identification de l'un des dispositifs d'éclairage (11F) présentant un dysfonctionnement, de manière à augmenter la luminosité d'au moins un des dispositifs d'éclairage (11A, 11C-11D, 11H-111, 11K-11P) ne présentant pas de dysfonctionnement et non adjacents à l'un des dispositifs d'éclairage (11F) présentant un dysfonctionnement de manière à faire en sorte que l'éclairage de la zone d'éclairage soit sensiblement égal à la valeur prédéterminée.

2. Système d'éclairage (1) ayant une fonction d'équilibrage d'éclairage selon la revendication 1, dans lequel chacun des dispositifs d'éclairage (11A - 11P) comprend en outre un module de communication sans fil (112) raccordé à son module de commande (111) et le module de commande (111) est configuré pour transmettre le signal de dysfonctionnement sur la base d'un protocole de communication sans fil au moyen du module de communication sans fil (112).

3. Système d'éclairage (1) ayant une fonction d'équilibrage d'éclairage selon la revendication 1, dans lequel chacun des dispositifs d'éclairage (11A - 11P) comprend en outre un module de détection d'intensité de lumière (113) raccordé à son module de commande (111) et configuré pour détecter une intensité de lumière ambiante, selon lequel le module de commande (111) détermine l'éclairage de la zone d'éclairage selon l'intensité de lumière ambiante.

4. Système d'éclairage (1) ayant une fonction d'équilibrage d'éclairage selon la revendication 1, dans lequel l'enregistrement de code d'identification est créé selon un ordre des codes d'identification des dispositifs d'éclairage (11A - 11P).

5. Procédé de commande pour équilibrer l'éclairage d'un système d'éclairage (1), comprenant les étapes consistant à :
répartir des dispositifs d'éclairage (11A - 11P) sur une zone d'éclairage en transmettant un signal de dysfonctionnement par un des dispositifs d'éclairage (11F) aux autres dispositifs d'éclairage ne présentant pas de dysfonctionnement(11A-11E, 11G-11P) lorsque l'un des dispositifs d'éclairage (11F) présente un dysfonctionnement, dans lequel chacun des dispositifs d'éclairage (11A-11E, 11G-11P) ne présentant pas de dysfonctionnement détermine s'il est adjacent à l'un des dispositifs d'éclairage (11F) présentant un dysfonctionnement selon un enregistrement de code d'identification et un code d'identification de celui-ci ;
faire en sorte qu'une luminosité de chacun des dispositifs d'éclairage (11B, 11E, 11G, 11J) ne présentant pas de dysfonctionnement et adjacent à celui des dispositifs d'éclairage (11F) présentant un dysfonctionnement soit augmentée de manière à faire en sorte que l'éclairage de la zone d'éclairage soit sensiblement égal à une valeur prédéterminée ;
le procédé de commande étant **caractérisé en ce que**, dans le cas dans lequel un éclairage de la zone d'éclairage ne parvient pas à atteindre la valeur prédéterminée après augmentation de la luminosité de chacun des dispositifs d'éclairage (11B, 11E, 11G, 11J) ne présentant pas de dysfonctionnement et adjacents à celui des dispositifs d'éclairage (11F) présentant un dysfonctionnement, le procédé inclut en outre l'étape consistant à transmettre un signal de réajustement de l'un des dispositifs d'éclairage (11F) présentant un dysfonctionnement aux dispositifs d'éclairage (11A, 11C-11D, 11H-111, 11K-11P) ne présentant pas de dysfonctionnement et non adjacents à l'un des dispositifs d'éclairage (11F) présentant un dysfonctionnement, selon l'enregistrement de code d'identification et le code d'identification du dispositif d'éclairage (11F) présentant un dysfonctionnement,
de manière à augmenter une luminosité d'au moins un des dispositifs d'éclairage (11A, 11C-11D, 11H-111, 11K-11P) ne présentant pas de dysfonctionnement et non adjacent à l'un des dispositifs d'éclairage (11F) présentant un dysfonctionnement, de manière à faire en sorte que l'éclairage de la zone d'éclairage soit sensiblement égal à la valeur prédéterminée.

6. Procédé de commande pour équilibrer l'éclairage du système d'éclairage (1) selon la revendication 5, **caractérisé par** la création de l'enregistrement de codes d'identification selon un ordre des codes d'identification des dispositifs d'éclairage (11A - 11P).
